# EUROPEAN PATENT APPLICATION

(11) **EP 4 574 237 A1**
(43) Date of publication of application: **25.06.2025**
(21) Application number: 24206821.1
(22) Date of filing: 16.10.2024
(51) Int. Cl.: B01D 53/04, B01D 53/047, B01D 53/06, B01D 53/08

(54) **PORTABLE MODULAR ROTARY TRUE MOVING BED FOR GAS SEPARATION AND METHOD THEREOF**

(30) Priority: 09.11.2023 IN 202321076712
(71) Applicant: Tata Consultancy Services Limited, Maharashtra (IN)
(72) Inventor: Suhail, Mohammed, 411028 Pune, Maharashtra (IN); Chaudhary, Ayush, 411028 Pune, Maharashtra (IN); Badhan, Navneet Singh, 411028 Pune, Maharashtra (IN); Subramanian, Sivakumar, 411028 Pune, Maharashtra (IN); Runkana, Venkataramana, 411028 Pune, Maharashtra (IN); Rao, Davuluri Prahlada, 500049 Hyderabad, Telangana (IN)
(74) Representative: Goddar, Heinz J.

(57) **Abstract**

Currently the gas separation techniques available in the industry have many drawbacks such as particle attrition, low adsorption rate, gas leakage and the like. The disclosed portable modular rotary true moving bed for gas separation helps in overcoming these drawbacks. The disclosed gas reactor includes an inner tube, an outer tube, and an outer jacket. The inner tube which is fixed to an internal frame includes a set of box modules filled with adsorbent material. The internal frame helps the inner tube to rotate in a single direction. The outer tube and the outer jacket which is fixed to an external frame include ports which helps in letting in and out gaseous mixture and circulating heating medium and cooling medium. The design of the portable modular rotary true moving bed helps in using it in small-scale gas separation such as in automobiles, trucks, and ships.

## Description

### CROSS-REFERENCE TO RELATED APPLICATIONS AND PRIORITY

The present application claims priority to Indian application no.202321076712, filed on November 09, 2023.

### TECHNICAL FIELD

The disclosure herein generally relates to a gas separator, and, more particularly, to a portable modular rotary true moving bed for gas separation and a method for gas separation using the same.

### BACKGROUND

Gas separation is a common technique for separating one or more gases from a gaseous mixture. It is important for numerous industrial operations, including the treatment of emissions from coal-fired power plants. This aims to remove carbon dioxide to lessen the greenhouse effect. Additional applications can be air-separation, removing CO2 from natural gas, separation of ethylene from a mixture of ethylene and ethane. The affinity of the gas for a specific sorbent such as zeolites, alumina, or activated carbon, or a solvent such as MEA (mono-ethanolamine), is used to separate the gas. In cryogenic distillation gases could be separated by increasing or decreasing the temperature and pressure of the system containing gases. This is done since gases have different boiling point in mixture, so they can be segregated into their individual components. Gas separation through membrane depends upon the affinities of one or more gases with the membrane material, leading to one molecule to permeate faster than the others. Solvent based technology for separating carbon dioxide from the gases have been commercially used for a long time. This solvent based technology is energy intensive compared to other technologies.

Adsorption employs porous materials to selectively adsorb one component from a mixture. It is a more energy efficient process compared to others that may be utilized for gas separation and purification. Adsorption is used in several processes, including natural gas purification, air separation, carbon capture and the like. It mainly consists of three process steps of adsorption, desorption or renewal of the adsorbent followed by cooling of the adsorbent material. The technology may be used in a variety of reactor configurations such as cyclical process steps with static beds, moving bed, or simulated moving beds and utilizing different regeneration mechanisms such as pressure swing, vacuum swing, temperature swing.

### SUMMARY

Embodiments of the present disclosure present technological improvements as solutions to one or more of the above-mentioned technical problems recognized by the inventors in conventional systems. For example, in one embodiment, a portable modular rotary true moving bed for gas separation is provided. The portable modular rotary true moving bed for gas separation includes a moving bed assembly comprising an inner tube, an outer tube, an outer jacket, and a set of zones. The inner tube includes a set of box modules having a one-way valve at two ends of each box module, and (ii) a set of slots. Each box module is filled with adsorbent material. The inner tube is fixed to an internal frame rotating in a single direction. The outer tube includes (i) a first set of ports and (ii) a fin structure on an outer surface of the outer tube. The outer jacket comprises a second set of ports on an outer surface of the outer jacket. The outer jacket has a predefined arc length. The set of zones includes an adsorption zone, a desorption zone, a heating zone, and a cooling zone.

The moving bed assembly attains heating and cooling of the adsorbent material by a heating medium and a cooling medium. The inner tube is enclosed by the outer tube. The outer tube and the outer jacket are fixed to an external frame. The first set ports are used for letting in and out a gaseous mixture from the moving bed assembly. The second set of ports are used for circulating in and out the cooling medium and the heating medium from the outer jacket.

The set of box modules are fixed to the inner tube with a fixed distance between the same facilitating a uniform flow of the gaseous mixture from one box module to another. The inner tube, the outer tube and the outer jacket are concentric in nature with at least a cross-section of (i) a semi-circle, or (ii) a rectangle. The cross-section of the outer tube and the outer jacket has at least one side open. The cross-section of the inner tube has all sides closed. A lubricant or a set of bearings are used in a gap between the inner tube and the outer tube.

The first set of ports are used for letting the gaseous mixture in and out of the adsorption zone and extracting a desorbed gas from the desorption zone. During indirect heating of the adsorbent material, the heating medium circulates via the second set of ports between a gap of the outer tube and the outer jacket in the heating zone and the cooling medium circulates via the second set of ports between the gap of the outer tube and the outer jacket in the cooling zone. During direct heating of the adsorbent material, the heating medium circulates via the first set of ports in the heating zone and the cooling medium circulates via the first set of ports in the cooling zone.

A locomotion drive rotates the internal frame at different speeds. The moving bed assembly facilitates at least one of (i) a temperature swing adsorption, (ii) a pressure swing adsorption, (iii) a vacuum swing adsorption, (iv) a concentration swing adsorption, or (v) a combination thereof. The outer jacket encloses the outer tube in the heating zone and the cooling zone of the moving bed assembly during the temperature swing adsorption.

In another embodiment, a process for separation of a target gas from the gaseous mixture using the portable modular rotary true moving bed is provided. The process includes, feeding, via a first set of ports, a gaseous mixture from a source to the portable modular rotary true moving bed. Further the process includes, adsorbing, a target gas from the gaseous mixture, by adsorbent material inside a set of box modules while passing through an adsorption zone. Then the process includes heating using a heating medium, the adsorbent material inside the set of box modules while passing through a heating zone and extracting the target gas, via the first set of ports, from the portable modular rotary true moving bed. Finally, the process includes cooling using a cooling medium, the adsorbent material inside the set of box modules while passing through a cooling zone.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a top view in wireframe mode depicting a portable modular rotary true moving bed for gas separation, according to some embodiments of the present disclosure.
FIG. 2 is an isometric view depicting the portable modular rotary true moving bed for gas separation, according to some embodiments of the present disclosure.
FIG. 3A is an expanded view depicting the inner tube of the portable modular rotary true moving bed for gas separation, according to some embodiments of the present disclosure.
FIG. 3B is an isometric view depicting the inner tube of the portable modular rotary true moving bed for gas separation, according to some embodiments of the present disclosure.
FIG. 4 is a cross-sectional view depicting a box module of the portable modular rotary true moving bed for gas separation in accordance with some embodiments of the present disclosure.
FIG. 5 is an isometric view depicting an outer tube of the portable modular rotary true moving bed for gas separation, in accordance with some embodiments of the present disclosure.
FIG. 6 is a cross-sectional view depicting an outer jacket of the portable modular rotary true moving bed for gas separation, according to some embodiments of the present disclosure.
FIG. 7 is an exemplary flow diagram illustrating a process for gas separation using the portable modular rotary true moving bed, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Presently, the most common methods for gas separation available in the industry are separation with solvents or sorbents, separation by cryogenic distillation, separation with membranes and so on. The various adsorption reactor configuration available in the industry are fixed bed, moving bed and fluidized bed reactors. True moving bed is a type of moving bed reactor and different technology for adsorption such as simulated moving bed are available in the art. Conventional moving bed, rotating bed and modular bed reactors are various true moving bed reactors available in the art.

In fixed bed reactor configuration, the gaseous mixture is passed through a stationary bed of packed adsorbents. In a set of cyclically repeating steps, the bed goes through operations, such as pressurization, adsorption, evacuation, and desorption. In cyclical adsorption processes, particle diameter, surface area and length of the bed are optimized to achieve high adsorption rate, capacity, and low pressure drop in the column. As some of the factors conflict with each other, careful optimization needs to be performed. For example, larger adsorbent pellets decrease the pressure drop inside the column, but also reduce the rate of adsorption.

In moving bed configuration, adsorbent particles are moved through different sections or reactors. As each of these sections are much shorter, the pressure drop is lower in comparison to an equivalent fixed bed process. The primary disadvantage of this configuration is its increased complexity, which is due to the need to transport particles between separate reactors that must be coupled, restricting the potential of performing pressure swing techniques along with the need for attrition resistant adsorbents.

The rotating bed reactor configuration comprises the adsorbent material in the form of disc-shaped sheets with parallel passages in between. The entire adsorbent bed is divided into four or more equal sectors. The gas mixture flows in between the sheets, based on the residence time of the gas each sheet sees gas mixture of different concentration along the length of the passage. A front disc section sees a richer gas stream while second disk sees a leaner gas stream, and this leads to underutilization of the second disc section. The flow of the gas mixture is parallel to the adsorbent sheets, and hence it has a lower contact area. The separation efficiency of the process for this configuration depends upon the efficiency of the sealing mechanism used to prevent leakage between different zones that operate at different pressure. This sealing and leakage across different zones are a major problem of this reactor configuration. As the feed gas and outlet gas ports are located near the walls of the container, the flow through the beds may suffer from channeling, leaving some section of the bed underutilized.

Embodiments of the present disclosure provide a portable modular rotary true moving bed for gas separation. The portable modular rotary true moving bed is designed in such a way that relative movement of adsorbent material with respect to a box module carriage, carrying the material appears to be stationary. This arrangement ensures eliminating particle attrition. A hot feed gas mixture is used for heating purpose that results in lowering the energy requirements of a desorption step. The counter flow between the gaseous mixture and the adsorbent material contained in box modules facilitate a steady state operation which requires less adsorbent material. The design of the portable modular rotary true moving bed, which has an airtight casing between an inner tube and an outer tube, and the mechanisms to allow unidirectional (one-way) flow of the gas mixture counter currents to the movement of the bed. The design of the portable modular rotary true moving bed is compact, enabling the use in small-scale gas separation such as in automobiles, trucks, rail engines, and ships.

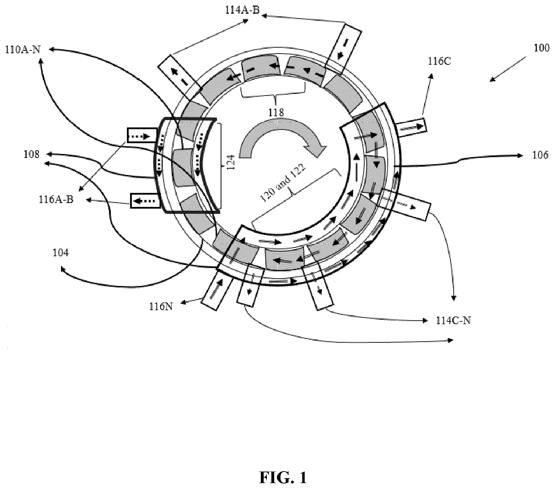

Referring now to the drawings, and more particularly to FIG. 1 through FIG. 7, where similar reference characters denote corresponding features consistently throughout the figures, there are shown preferred embodiments and these embodiments are described in the context of the following exemplary system and/or method.

Reference numerals of one or more components of the portable modular rotary true moving bed for gas separation, as depicted in the FIG. 1 through FIG. 6 are provided in Table 1 below for ease of description.

**Table 1**

| **S.NO** | **NAME OF COMPONENT** | **REFERENCE NUMERALS** |
|---|---|---|
| 1 | Portable modular rotary true moving bed | 100 |
| 2 | Inner tube | 104 |
| 3 | Outer tube | 106 |
| 4 | Outer jacket | 108 |
| 5 | Set of box modules | 110A-N |
| 6 | Set of slots | 112A-N |
| 7 | First set of ports | 114A-N |
| 8 | Second set of ports | 116A-N |
| 9 | Adsorption zone | 118 |
| 10 | Desorption zone | 120 |
| 11 | Heating zone | 122 |
| 12 | Cooling zone | 124 |
| 13 | Internal frame | 126 |
| 14 | External frame | 128 |

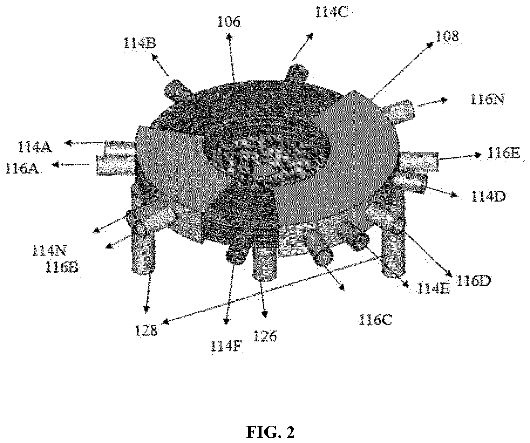

FIG. 1 is a top view in wireframe mode depicting a portable modular rotary true moving bed (100) for gas separation, according to some embodiments of the present disclosure. FIG. 2 is an isometric view depicting the portable modular rotary true moving bed (100) for gas separation, according to some embodiments of the present disclosure. The disclosed true moving bed configuration consists of a moving bed assembly with an inner tube (104), an outer tube (106), an outer jacket (108) and a set of zones. The moving bed assembly facilitates any one of a temperature swing adsorption, a pressure swing adsorption, a vacuum swing adsorption, a concentration swing adsorption. The moving bed assembly can also facilitate a combination of two or more of the above mentioned adsorption techniques. The moving bed assembly attains heating and cooling of the adsorbent material by a heating medium and a cooling medium.

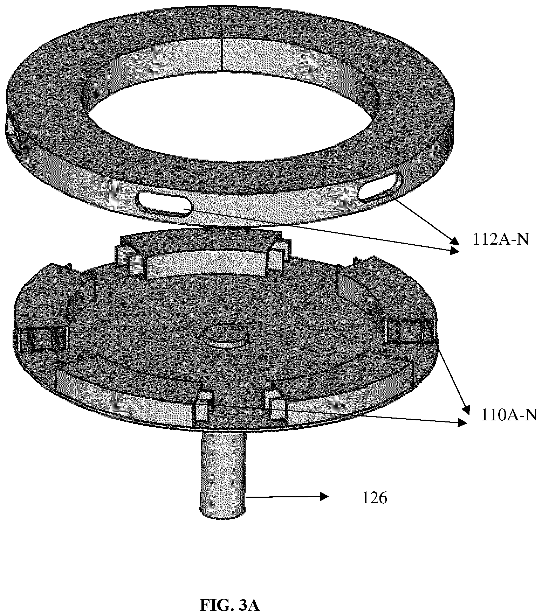

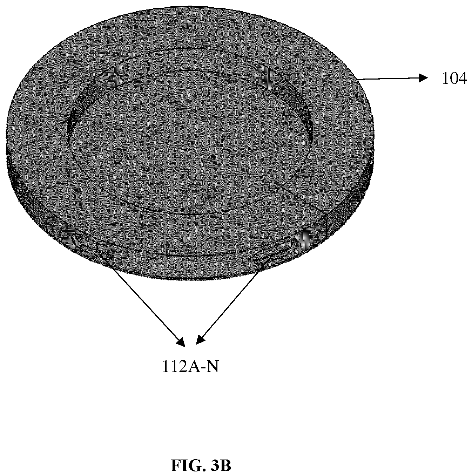

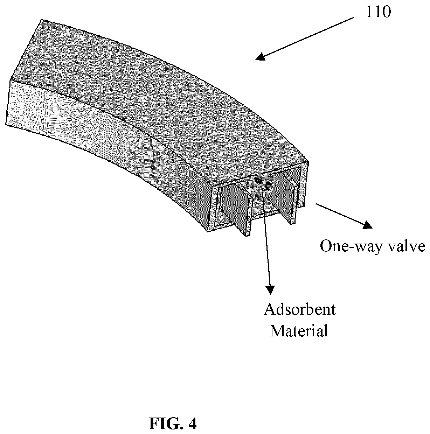

FIG. 3A is an expanded view depicting the inner tube (104) of the portable modular rotary true moving bed (100) for gas separation, according to some embodiments of the present disclosure. FIG. 3B is an isometric view depicting the inner tube (104) of the portable modular rotary true moving bed (100) for gas separation, according to some embodiments of the present disclosure. The inner tube (104) consists of (i) a set of box modules (110A-N) and (ii) a set of slots (112A-N) as shown in FIG. 3A and FIG. 3B. Each box module has a one-way valve at its two ends and each box module is filled with adsorbent material. The box modules (110A-N) hosting the adsorbent material have one way valves (or dampers) that are in the front and the rear to allow for entry and exit of gas flow in one direction. This prevents any passing of the gas between the set of zones and helps create well defined boundaries across the set of zones. FIG. 4 is a cross-sectional view depicting the box module (110) of the portable modular rotary true moving bed (100) for gas separation in accordance with some embodiments of the present disclosure. The disclosed assembly supports a variety of adsorbent materials which may be used for physisorption or chemisorption, such as zeolites, silica gel, activated carbon, carbonates of alkali metals and the like. Adsorbents may be in the form of powders or structured in nature as well powdered form of adsorbent have more mass transfer area per unit volume which enhance the adsorption dynamics. However, it involves an increase of pressure drop which thereby increases the operating cost. Whereas structured form has lower pressure drop as compared to powdered form, but lesser area is available for mass transfer. These can be used in accordance with the utility and application.

The inner tube (104) is fixed to an internal frame (126) which is rotating in a single direction. A locomotion drive, for example a stepper motor, a gear, motors, and the like, is used to rotate the internal frame. The set of zones in the moving bed assembly are an adsorption zone, a desorption zone, a heating zone, and a cooling zone. The set of box modules (11 0A-N) are fixed to the inner tube (104) with a fixed distance between the same facilitating a uniform flow of a gaseous mixture from one box module to another.

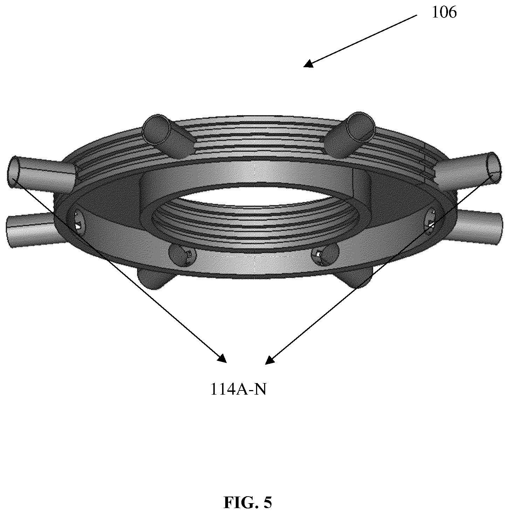

FIG. 5 is an isometric view depicting the outer tube (106) of the portable modular rotary true moving bed for gas separation, in accordance with some embodiments of the present disclosure. The outer tube (106) consists of a first set of ports (114A-N) and a fin structure on an outer surface of the outer tube (106). The outer tube (106) has fin structure on the outer surface to enhance the heat transfer area (and capacity) along with the first set of ports. The first set of ports are used for letting the gaseous mixture in and out of the adsorption zone and extracting a desorbed gas from the desorption zone. The gaseous mixture enters the inner tube when the slot in the inner tube is in line with the first set of ports of outer tube (106). The gas flow is in the opposite direction to the direction of the moving bed assembly rotation providing the benefits of counter current contact. For any operation, where co-current contact is preferred, it can be easily accommodated. Lubricants or a set of bearings is used in a gap between the inner tube (104) and the outer tube (106) to smoothen the motion of inner tube relative to the outer tube (106). Lubrication also prevents the bypass of the gaseous mixture from the inner tube (104) to the outer tube (106). Bearings also makes the movement of the inner tube (104) and the outer tube (106) smooth and prevents the gas bypass. The inner tube (104) is enclosed by the outer tube (106). In another embodiment, the box modules (110A-N) may be directly encapsulated by the outer tube (106) without the inner tube covering them from all the sides. This configuration may improve the heat transfer rate from outer casing, but measures have to be taken to make sure that the gas mixture passes through the box modules in succession without bypassing any until the end of the adsorption zone.

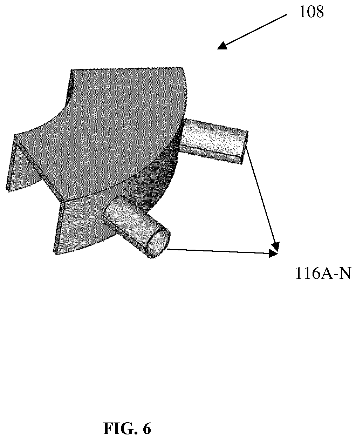

FIG. 6 is a cross-sectional view depicting the outer jacket (108) of the portable modular rotary true moving bed for gas separation, according to some embodiments of the present disclosure. The outer jacket (108) consists of a second set of ports (116A-N) on an outer surface of the outer jacket (108). The outer jacket (108) has a predefined arc length as shown in FIG. 2 and FIG. 6, depending on the process need for heating and cooling purpose. The outer tube (106) and the outer jacket (108) are fixed to an external frame (128). The first set of ports of the outer tube (106) and the second set of ports of the outer jacket (108) are used for letting in and out a gaseous mixture from the moving bed assembly and circulating in and out the cooling medium and the heating medium from the outer jacket (108). A gap between the outer tube (106) and outer jacket (108) is available where cooling or heating medium could flow like a heat exchanger operation. The inner tube (104), the outer tube (106) and the outer jacket (108) are concentric in nature with a cross-section of a semi-circle, a rectangle and the like. However, other shapes such as dome, triangle, etc. are also possible. The type of the cross section of inner tube (104), outer tube (106) and outer jacket (108) should not prevent the motion of the inner tube (104). The cross-section of the outer tube (106) and the outer jacket (108) has at least one side open as shown in FIG. 5 and FIG. 6. However, the cross-section of the inner tube (104) can have all sides closed during operation and could be removed from the top for maintenance of the adsorbent material as shown in FIG. 3A. The primary requirement being the outer tube (106) (and the outer jacket (108)) should not prevent the smooth rotation of box modules or inner tube (104) carrying the box modules.

If the moving bed assembly is facilitating temperature swing adsorption technique, during an indirect heating of the adsorbent material, the heating medium circulates through the second set of ports of the outer jacket (108) between the gap of the outer tube (106) and the outer jacket (108) in the heating zone. Also, the cooling medium circulates via the second set of ports between the gap of the outer tube (106) and the outer jacket (108) in the cooling zone. Whereas during a direct heating of the adsorbent material, the heating medium circulates through the first set of ports in the heating zone and the cooling medium circulates via the first set of ports in the cooling zone. When the moving bed assembly facilitates temperature swing adsorption technique, the outer jacket (108) encloses the outer tube (106) in the heating zone and the cooling zone.

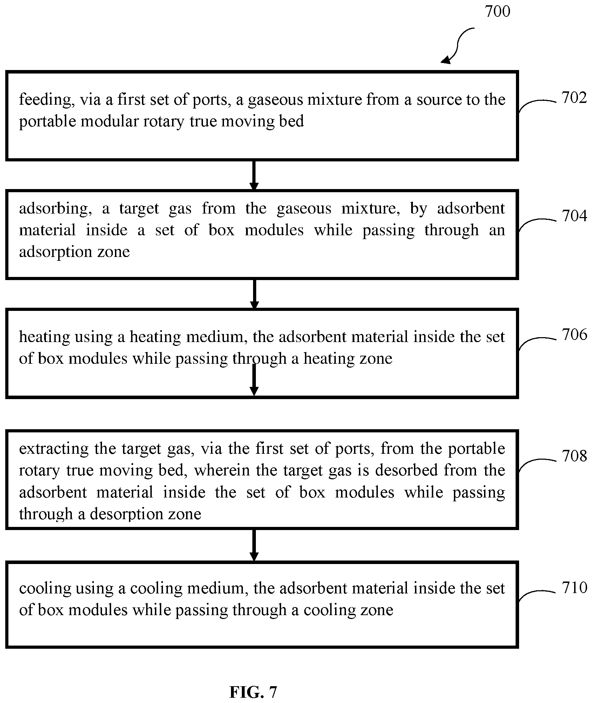

FIG. 7 is an exemplary flow diagram 700 illustrating a process for gas separation using the portable modular rotary true moving bed, according to some embodiments of the present disclosure. FIG. 7 is explained in conjunction with the components explained for FIG. 1 and FIG. 2. At step 702 of the process 700, a gaseous mixture is fed via the first set of ports from a source to the portable modular rotary true moving bed. The source may be a combustion engine, a process equipment which produces flue gases and so on. At step 704 of the process 700, the gaseous mixture passes through the adsorption zone (118) and a target gas(es) is adsorbed and a lean gas leave the moving bed assembly from the first set of ports (114A-N). At step 706 of the process 700, the adsorbent material inside the set of box modules (110A-N) is heated while passing through the heating zone (122) using the heating medium. The adsorbent material may get heated externally (non-contact) by the heating medium such as flue gas or by any other means. The heating medium enters from the second set of ports (116A-N) located in the outer jacket (108) and heat the outer tube (106). This heat is further transferred to adsorbent material primarily through conduction.

At step 708 of the process 700, the target gas is desorbed from the adsorbent material inside the set of box modules (110A-N) while passing through the desorption zone (120) and it is extracted from the portable modular rotary true moving bed via the first set of ports (114A-N). In the desorption zone, both the ends or one of the ends of the box modules (110A-N) are opened, and the gas is desorbed using suction from the first set of ports in the outer tube (106) by maintaining low pressure. This would result in the direct collection of the adsorbed gas(es) and help in regenerating the adsorbent bed. Heat integration across the set of zones can be readily implemented in this disclosed design. For example, heat from the flue gas can be used in the desorption, then the low temperature flue gas could be sent for adsorption. Thus, minimizing the heating or cooling requirements for the adsorption. In some cases, the heat recovered by the cooling medium may be enhanced with additional heating to provide the heating required for desorption. The medium maybe then be subsequently cooled further before recirculating it back to the cooling step of the process. At step 710 of the process 700, the adsorbent material inside the set of box modules (110A-N) is cooled while passing through the cooling zone (124) using the cooling medium. Further the box modules move to the adsorption zone and the same process is repeated,

In another embodiment, the moving bed assembly can be stacked one after another (vertically or horizontally), such that a part of the gaseous mixture acts as input for one of the moving bed assemblies to support higher throughput requirements. The total amount of gaseous mixture could be divided equally to the number of moving bed assemblies in the stack to process more gas thereby increasing the overall capacity of the process. Also, the gaseous mixture coming out after the absorption process could be redirected to another assembly for removal of the target gas which remain in the mixture even after the process through a first moving bed assembly. This will increase the recovery or purity requirements from the overall system. In another embodiment, the processed gas streams may be recycled within the true moving bed to improve the purity requirements of the separated gas streams similar to recycle that happens in a traditional distillation column by refluxing or reboiling.

Based on the adsorption techniques used, the heating zone and cooling zone would be optional. For example, for the pressure swing adsorption, the vacuum swing adsorption, and the concentration swing adsorption, the heating zone and the cooling zone is not required because in techniques where temperature swing is not used, desorption and regeneration can be achieved by applying vacuum or by providing a concentration gradient. While the entire inner tube (104) containing the box modules is rotated at the same speed, the sector lengths of each of the adsorption, heating/desorption, and cooling zones can be proportioned depending on the rates of the each of the process steps. In other words, faster process are provided with smaller sector length, while slower processes are provided with longer sectors. Thus, the residence time for each zone can be different and depend upon the process parameters. Hence the length of each zone could be adjusted based on the process requirement. As there are many ports available in the inner tube (104) and outer tube (106), the disclosed gas reactor allows more than one cycle of complete absorption and desorption within one rotation of the moving bed assembly. The inner tube (104) moves as the internal frame rotates with help of stepper motors or any other rotating mechanism that are used to speed up or slow down the box modules to increase the utilization of the moving bed assembly. For example, the time spent by the box module in the adsorption zone after the slot of inner tube (104) crosses the first set of ports blocked by the outer tube (106) can be reduced by rotating the moving bed assembly faster, therefore exposing the next slot quickly. As all the ports and slots are aligned to the length of the box modules, this shall benefit modules in all the other zones equally.

The written description describes the subj ect matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein provides a portable modular rotary true moving bed for gas separation. In the disclosed gas reactor, the adsorbent material is not moving relative to each other for which there is no particle attrition. Less adsorbent material is required for the disclosed gas reactor since the counter-current flow between the gaseous mixture and the adsorbent material containing the box modules facilitate a steady-state operation. The disclosed gas reactor also minimizes gas leakage as compared to the known gas reactors in the industry. Also, it can be used in small-scale gas separation as well.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope of disclosed embodiments being indicated by the following claims.

## Claims

1. A portable modular rotary true moving bed (100) for gas separation comprising:
a moving bed assembly, comprising an inner tube (104), an outer tube (106), an outer jacket (108), and a set of zones, wherein:
the inner tube comprising (i) a set of box modules (110A-N) having a one-way valve at two ends of each box module, wherein each box module is filled with the adsorbent material and (ii) a set of slots (112A-N), and wherein the inner tube is fixed to an internal frame (126) rotating in a single direction,
the outer tube, fixed to an external frame and enclosing the inner tube, comprising (i) a first set of ports (114A-N) and (ii) a fin structure on an outer surface of the outer tube, wherein the first set of ports facilitates inward and outward movement of a gaseous mixture into the moving bed assembly,
the outer jacket, fixed to the external frame, comprising a second set of ports (116A-N) on an outer surface of the outer jacket, wherein the outer jacket has a predefined arc length, and wherein the second set of ports facilitates inward and outward movement of the heating medium and the cooling medium into the moving bed assembly, and
the set of zones for gas separation, comprising an adsorption zone (118), a desorption zone (120), a heating zone (122) and a cooling zone (124),
wherein the moving bed assembly attains heating and cooling of the adsorbent material by a heating medium and a cooling medium.

2. The portable modular rotary moving bed of claim 1, wherein the set of box modules are fixed to the inner tube with a fixed distance between adjacent box modules facilitating a uniform flow of the gaseous mixture from one box module to another.

3. The portable modular rotary moving bed of claim 1, wherein:
the inner tube, the outer tube and the outer jacket are concentric in nature with at least a cross-section of (i) a semi-circle, or (ii) a rectangle,
the cross-section of the outer tube and the outer jacket has at least one side open,
the cross-section of the inner tube has all sides closed, and
a lubricant or a set of bearings are used in a gap between the inner tube and the outer tube.

4. The portable modular rotary moving bed of claim 1, wherein the first set of ports are used for:
(i) letting the gaseous mixture in and out of the adsorption zone; and
(ii) extracting a desorbed gas from the desorption zone.

5. The portable modular rotary moving bed of claim 1, wherein during an indirect heating of the adsorbent material, wherein:
(i) the heating medium circulates via the second set of ports between a gap of the outer tube and the outer jacket in the heating zone, and
(ii) the cooling medium circulates via the second set of ports between the gap of the outer tube and the outer jacket in the cooling zone,
and wherein during a direct heating of the adsorbent material, the heating medium circulates via the first set of ports in the heating zone and the cooling medium circulates via the first set of ports in the cooling zone.

6. The portable modular rotary moving bed of claim 1, wherein a locomotion drive rotates the internal frame along with the inner tube at different speeds.

7. The portable modular rotary moving bed of claim 1, wherein the moving bed assembly facilitates at least one of (i) a temperature swing adsorption, (ii) a pressure swing adsorption, (iii) a vacuum swing adsorption, (iv) a concentration swing adsorption, or (v) a combination thereof, and wherein the outer jacket encloses the outer tube in the heating zone and the cooling zone of the moving bed assembly during the temperature swing adsorption..

8. A process (700) for separation of a target gas from the gaseous mixture using a portable rotary true moving bed, comprising:
feeding, via a first set of ports, a gaseous mixture from a source to the portable modular rotary true moving bed (702);
adsorbing, a target gas from the gaseous mixture, by adsorbent material inside a set of box modules while passing through an adsorption zone (704);
heating using a heating medium, the adsorbent material inside the set of box modules while passing through a heating zone (706),
extracting the target gas, via the first set of ports, from the portable rotary true moving bed, wherein the target gas is desorbed from the adsorbent material inside the set of box modules while passing through a desorption zone (708); and
cooling using a cooling medium, the adsorbent material inside the set of box modules while passing through a cooling zone (710);
wherein the portable modular rotary true moving bed comprising:
a moving bed assembly, comprising an inner tube, an outer tube, an outer jacket, and a set of zones,
the inner tube comprising (i) the set of box modules having a one-way valve at two ends of each box module, wherein each box module is filled with the adsorbent material and (ii) a set of slots, and wherein the inner tube is fixed to an internal frame rotating in a single direction,
the outer tube, fixed to an external frame and enclosing the inner tube, comprising (i) a first set of ports and (ii) a fin structure on an outer surface of the outer tube, wherein the first set of ports facilitates inward and outward movement of a gaseous mixture into the moving bed assembly,
the outer jacket, fixed to the external frame, comprising a second set of ports on an outer surface of the outer jacket, wherein the outer jacket has a predefined arc length, and wherein the second set of ports facilitates inward and outward movement of the heating medium and the cooling medium into the moving bed assembly, and
the set of zones for gas separation, comprising the adsorption zone, the desorption zone, the heating zone and the cooling zone,
wherein the moving bed assembly attains heating and cooling of the adsorbent material by the heating medium and the cooling medium.

9. The process of claim 8, wherein the set of box modules are fixed to the inner tube with a fixed distance between adjacent box modules facilitating a uniform flow of the gaseous mixture from one box module to another.

10. The process of claim 8, wherein:
the inner tube, the outer tube and the outer jacket are concentric in nature with at least a cross-section type of (i) a semi-circle, or (ii) a rectangle,
the cross-section of the outer tube and the outer jacket has at least one side open,
the cross-section of the inner tube has all sides closed, and
a lubricant or a set of bearings are used in a gap between the inner tube and the outer tube.

11. The process of claim 8, wherein the first set of ports are used for:
(i) letting the gaseous mixture in and out of the adsorption zone, and
(ii) extracting a desorbed gas from the desorption zone.

12. The process of claim 8, wherein during an indirect heating of the adsorbent material, wherein:
(i) the heating medium circulates via the second set of ports between a gap of the outer tube and the outer jacket in the heating zone, and
(ii) the cooling medium circulates via the second set of ports between the gap of the outer tube and the outer jacket in the cooling zone,
and wherein during a direct heating of the adsorbent material, the heating medium circulates via the first set of ports in the heating zone and the cooling medium circulates via the first set of ports in the cooling zone.

13. The process of claim 8, wherein a locomotion drive rotates the internal frame along with the inner tube at different speeds.

14. The process of claim 8, wherein the moving bed assembly facilitates at least one of (i) a temperature swing adsorption, (ii) a pressure swing adsorption, (iii) a vacuum swing adsorption, (iv) a concentration swing adsorption, or (v) a combination thereof, and wherein the outer jacket encloses the outer tube in the heating zone and the cooling zone of the moving bed assembly during the temperature swing adsorption.
